# EUROPEAN PATENT APPLICATION

(11) **EP 1 732 025 A1**
(43) Date of publication of application: **13.12.2006**
(21) Application number: 05291247.4
(22) Date of filing: 09.06.2005
(51) Int. Cl.: G06F 21/04

(54) **Method to secure a portable object working with a portable object accepting device using shared secret data**

(71) Applicant: Axalto SA, 92120 Montrouge (FR)
(72) Inventor: Joffray, Olivier, c/o Axalto S.A., 78431 Louveciennes Cedex (FR)
(74) Representative: Renault, Patricia Marie Jacqueline

(57) **Abstract**

The method according to this invention concerns a method to secure a portable object working with at least a portable object accepting device containing secret information, characterised in that it consists:
- in making a variable progressing regularly and dispatching at each modification its new value to allowed portable object accepting device(s) ;
- in checking in said portable object when working with said portable object accepting device the progression of the variable contained in said portable object accepting device by comparison to a reference value stored in said portable object;
- in replacing the reference value in said portable object by the value of the variable contained in the portable object accepting device if the comparison shows a progression of said variable compared to the reference value or an equivalence with the reference value ;
- in preventing the access to said secret information if the comparison does not show a progression or an equivalence.

This invention also concerns the electronic module, the portable object, the portable object accepting device and the certification authority in which said method is implemented.

## Description

This invention concerns a method and a device to secure a portable object aimed at working with a portable object accepting device with which it shares secret data. More precisely, the purpose of the method is to prevent the use of said portable object accepting device in order to obtain secret information contained in the portable object.

### TECHNICAL FIELD

Cards with integrated circuit also called smart cards are small plastic secure devices, which contain one or more embedded integrated circuits. A card with integrated circuit can be for example a microprocessor card also called microprocessor chip card. A smart card is accessed with a card reader that has an aperture or slot or else into which the smart card is inserted. The smart card reader covers every device used to receive or to be connected with a smart card and work with it (read, write, delete, and/or every possible operation). The smart card reader can be part or linked with a terminal, a computer, a pin pad or else... The present invention covers smart cards but also every portable object provided with integrated circuit allowing to work or dialog with at least one portable object accepting device, and in embodiments described hereafter, portable object with at least one integrated circuit designed to offer security functions such as authentication, validation, encryption/decryption, secure storage, .... The portable object accepting device may have the form of a housing provided with an aperture or slot to receive the portable object but also any form allowing to receive or to be connected with a the portable object and work with it.

Smart card is a very secure device. There are many types of secure operation which require the secure input of information (a Personal Identification Number (PIN), a validation acknowledgment, secret data such as a cryptographic key for symmetric or asymmetric algorithm ...) and which can be controlled by a smart card or any other secure component, in an unsecured environment constituted by a processing data unit for example a terminal which can be open or not trustable. However, all the security brought by the smart card may be useless because the terminal is not a trustable environment: it constitutes an open system. If the terminal is robbed, it shall be possible to use it and its secret data to access secret information from smart card of the same application.

A solution could consist in revoking a robbed terminal. However, informing of the robbed terminal all smart cards that may interact with such a terminal would not be feasible.

One purpose of this invention is to prevent the use of a terminal owning secret data, which allows said terminal to access secret information from smart card.

### SUMMARY OF THE INVENTION

This invention concerns a method to secure a portable object containing secret information working with at least a portable object accepting device, characterised in that it consists:
- in making a variable progressing regularly and dispatching at each modification its new value to allowed portable object accepting device(s) ;
- in checking in said portable object when working with said portable object accepting device the progression of the variable contained in said portable object accepting device by comparison to a reference value stored in said portable object;
- in replacing the reference value in said portable object by the value of the variable contained in the portable object accepting device if the comparison shows a progression of said variable compared to the reference value or an equivalence with the reference value ;
- in preventing the access to said secret information if the comparison does not show a progression or an equivalence.

This invention also concerns an electronic module, a portable object comprising said module, a portable object accepting device, a third device as an authority of certification, in which said method is implemented and a program to implement said method.

### BRIEF DESCRIPTION OF THE DRAWINGS

Other purposes, features and advantages of the invention will appear on reading the description which follows of the implementation of the method according to the invention and of a mode of realisation of an electronic system designed for this implementation, given as a non-limiting example, and referring to the attached drawings in which:
- figure 1 is a diagrammatic representation of an example of a portable object in which the method according to this invention is implemented;
- figure 2 is a diagrammatic representation of an example of a portable object accepting device in which the method according to this invention is implemented;
- figure 3 is a diagrammatic representation of an example of a certification authority in which the method according to this invention is implemented;
- figure 4 is diagrammatic representation of the execution of the method in which the different steps according to one form of realisation of this invention have been demonstrated;

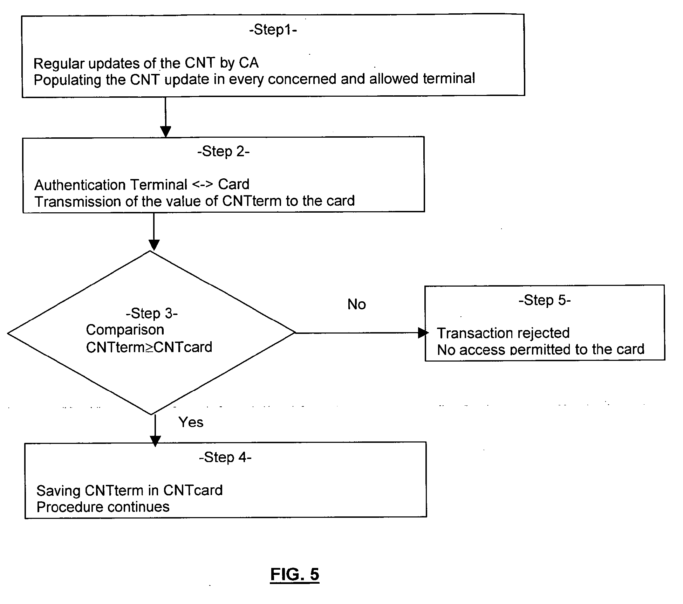

- figure 5 is a diagrammatic representation of the different steps of the method represented on figure 4.

### WAY OF REALISING THE INVENTION

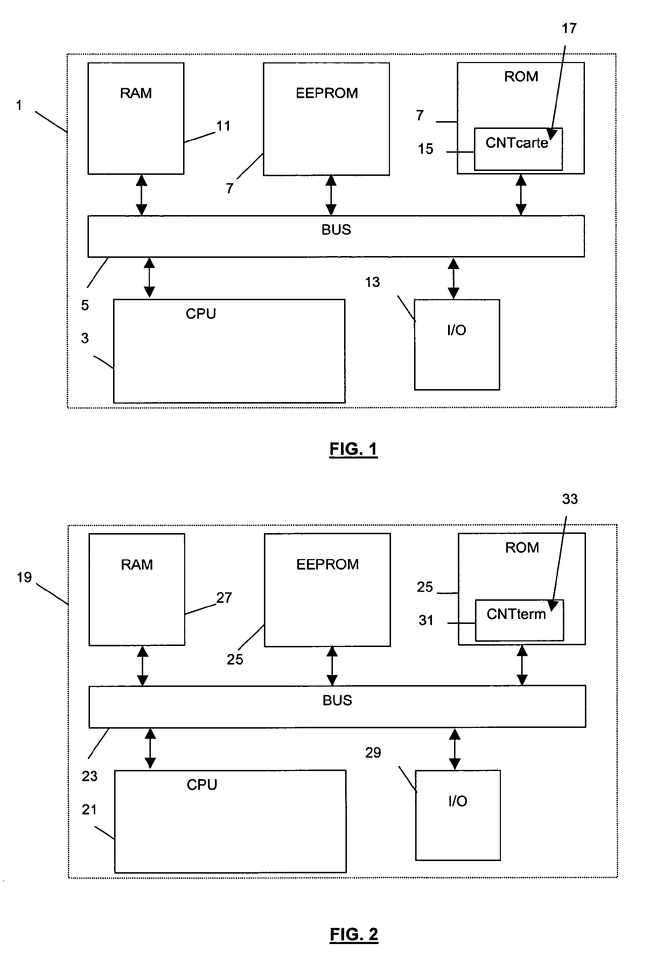

The purpose of the method according to the invention is to secure the use of an electronic assembly and for example a portable object such as a smart card storing secret information with a portable object accepting device(s) as defined here above (such as a reader, terminal, computer or else). The portable object accepting device and the electronic assembly comprise each at least processing means such as a processor and storage means such as a memory. The devices used to implement the present invention are described here below according to an example of embodiment illustrated on figures 1 to 3.

As a non-limiting example, the electronic assembly described below corresponds to an onboard system comprising an electronic module 1 illustrated on figure 1. This type of module is generally realised as a monolithic integrated electronic microcircuit, or chip, which once physically protected by any known means can be assembled on a portable object such as for example a smart card, microcircuit or integrated circuit card (microprocessor card, etc.) or other card which can be used in various fields.

The electronic module 1 (represented on figure 1) comprises a microprocessor CPU 3 with a two-way connection via an internal bus 5 to a non volatile memory 7 of type ROM, EEPROM, Flash, FeRam, a volatile memory 11 of type RAM, input/output means I/O 13 to communicate with the exterior and more particularly with a portable object accepting device 19. A location 15 is provided in the non volatile memory to store the value of a counter CNTcarte 17.

The portable object accepting device 19, for example a terminal (represented on figure 2) comprises at least a microprocessor CPU 21, with a two-way connection via an internal bus 23 to a non volatile memory 25 of type ROM, EEPROM, Flash, FeRam, a volatile memory 27 of type RAM, input/output means I/O 29 to communicate with the exterior and more particularly with the module 1. A location 31 is provided in the non-volatile memory to store the value of a counter CNTterm 33 and other possible data as for example the signature of said value.

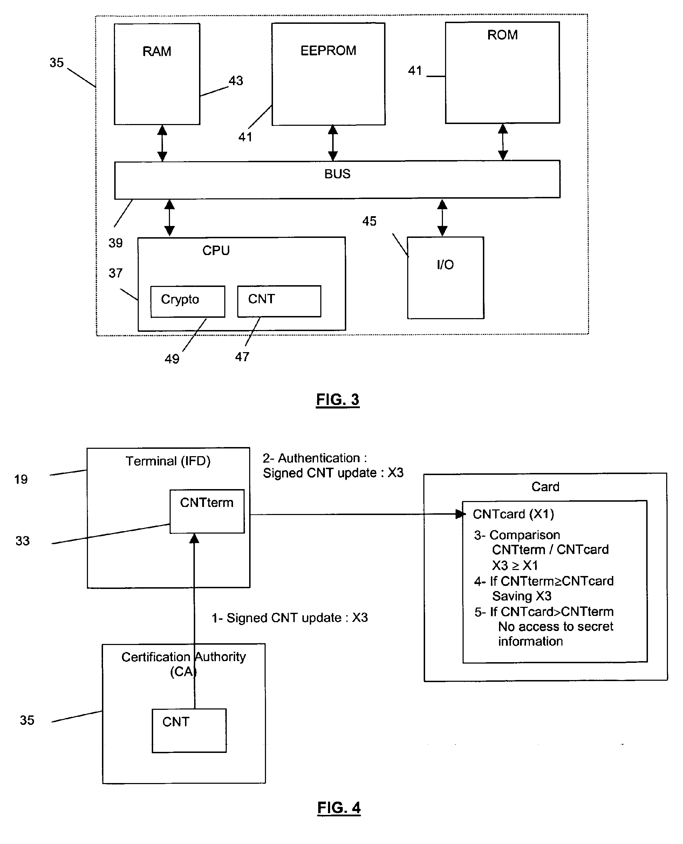

A third device, an authority of certification 35 (CA - represented on figure 3) comprises at least a microprocessor CPU 37, with a two-way connection via an internal bus 39 to a non volatile memory 41 of type ROM, EEPROM, Flash, FeRam, a volatile memory 43 of type RAM, input/output means I/O 45 to communicate with the exterior and more particularly with the portable object accepting device 19 (terminal 19). In a particular embodiment described hereafter, a hardware or software counter 47 is provided to calculate values for a variable and a hardware or software cryptographic module 49 to calculate a signature on said values.

Large-scale application requires a portable object, and for example a smart card to work on every terminal supporting the application. Mutual authentication between the terminal and the smart card is provided requiring cryptographic known techniques and associated keys.

The method according to the invention consists :
- in making a variable progressing regularly and dispatching at each modification its new value to allowed portable object accepting device (s) ;
- in checking in said portable object when working with said portable object accepting device the progression of the variable contained in said portable object accepting device by comparison to a reference value stored in said portable object;
- in replacing the reference value in said portable object by the value of the variable contained in the portable object accepting device if the comparison shows a progression of said variable compared to the reference value or an equivalence with the reference value ;
- in preventing the access to said secret information if the comparison does not show a progression or an equivalence.

If a terminal is robbed, said variable is no more updated in the robbed terminal and the smart card detects the absence of progression since it works with other terminals, which implies the progression of the reference value.

The portable object accepting device(s) may be for example all the portable object accepting device(s), which have to access to data in the portable object to be protected by the variable progression checking. The portable object accepting device(s) may for example be those containing an application to secure, such as for example of application, identity card. All the terminal(s) and the card working together for an access to the identity of the owner of the card by means of said terminal(s) are implementing the present invention. There may also be a restriction on the user of the terminal(s) : the terminal(s) concerned may be only those used by the police for example.

Secret information are information in the portable object for which the access has to be protected.

The allowed terminals are the terminals, which are not blacklisted. A blacklisted terminal is a terminal for which the access to the data to be protected in the portable object has to be denied since for example it has been robbed or hacked or else : consequently, the value of the variable must not be dispatched to said blacklisted terminal.

"Progressing" means changing the value of the variable, the value of said variable at a determined date and time being different from all the previous values already taken by said variable before said date and time. "Regularly" means at determined intervals of time. For example, the intervals of time may be chosen so that statistically the card has its counter changed between two uses.

More precisely, the method consists in adding a location 31 for the value of the counter CNTterm 33 and for the signature of said value in every allowed terminal. The value of the counter CNTterm is signed using a private key by the authority of certification 35. The information sufficient to verify the authenticity of this counter and more precisely the public key is public and known by every smart card of the application. The portable object can verify said signature with said public key and so verify the associated counter value.

The authority 35 owning the private key updates the counter value regularly (e.g. every days), calculates a signature on the updated counter value with the private key and populates the updated counter value (step 1 in figures 3 and 4) with its calculated signature to all allowed terminals 19. According to one embodiment, the authority of certification comprises the counter 47, which is regularly incremented. The processing means 37 provides the cryptographic module 49 with the value of the counter 47 in order to calculate a signature of said value with the private key.

When the value CNTterm 33 is changed, the certification authority 35 sends the new counter value and the calculated signature on said value to all the allowed portable object accepting device(s). Said portable object accepting device(s) store said counter value and said signature in the memory 25.

At least, each time a terminal wishes to access to protected data of a portable object according to the present invention, a checking operation is run before authorizing the access. This checking operation has to be done before any access to stored protected data and may according to one embodiment be part of an authentication procedure between the terminal 19 and the portable object. The present invention consists then in this particular embodiment in adding to the authentication exchanged data the value of the counter stored in the memory 31 with the associated signature.

Each time a terminal authenticates itself to a smart card (step 2 in figures 3 and 4), it also extracts from the location 31 of the memory 25 the counter value with the associated signature and sends them to the smart card.

Either the card contains an initial counter value CNTcard introduced during the manufacturing, the personalization or the distribution of said card (or any other card processing) or the counter value CNTcard is initialized when working with the terminal 19 and for example by the first authentication.

During the terminal authentication, the smart card compares the counter value (step 3 in figures 3 and 4) presented by the terminal (CNTterm) with the one (the reference value) it saved during the previous transaction (CNTcard) with the same or another terminal.

If the new value is bigger or equal to the one saved (CNTterm ≥ CNTcard), the smart card contains means to replace the reference value with the new counter value.

If the new value is not bigger or equal to the one saved (CNTcard >CNTterm), the smart card considers the terminal as not acceptable and rejects the transaction (step 5), preventing the access to confidential information and services.

When a terminal is robbed, it is black listed and the authority of certification never sends the terminal new counter values and signature. So the value of CNT term remains the same. When a new card for which the value of the counter has increased with each of its different use, is inserted in the robbed terminal, the comparison is not true and the transaction is rejected (step 5).

On an improved implementation of the solution, the signed counter value would be populated to the smart cards by a plurality of means, such as public transportation barriers, in order to keep as much smart cards counter value up to date.

The counter value and its signature shall be sent from the certification authority 35 to the terminal(s) and from the terminal(s) to each smart card through a secure channel; then it is not possible for someone who robbed a terminal to get a recent counter with a signature couple to upgrade the robbed terminal.

The present invention is described hereafter in detail for a particular application: the identity card. The terminals (IFD) owns a secret key permitting to access information that shall usually be kept confidential except for the authorities that emitted the card. Such information may be the owner fingerprint.

To access said information, the authority shall authenticate itself to the smart card. The authority may be:
The administration to declare taxes.
The police.
...

If someone robs a terminal owning the secret key that allows accessing the smart card, he may read confidential information that shall be addressed under specific conditions. However, for example, the police has to be the only authority allowed to read a fingerprint saved in the card. Consequently, the present invention allows to prevent a large-scale use of such robbed equipment to get information from numbers of cards.

Before issuing a new identity card, the certification authority 35 loads its counter with the most recent value that was populated to the terminals of the network. As indicated here above, the counter comes with a signature guarantying its authenticity. Let say this counter value is X1 (figure 3).

Other cards already distributed are already in use; the system works and the terminals regularly download an updated counter value (step 1) with a signature it cannot calculate by itself (only the certification authority can).

When the card owner receives his card, terminals counter have already changed being regularly incremented and populated by the certification authority. The most recent signed counter value is now X3.

The first time the card is inserted in a terminal, the terminal IFD authenticates itself to the card and presents the most recent counter value it has that is X3 (step 2).

The card compares X1 and X3 (step 3), verifying that X1 ≤ X3. When the equation is verified (step 4), the card replaces X1 value with X3 in order to own the most recent value of the counter.

Now if a terminal is robbed, the day the robbery happens, the counter value is X3.

Knowing the terminal was robbed the authority blacklists it. Its counter value cannot progress anymore as the authority stops updating it.

In the mean time, the system continues to live and the counter of other terminals is regularly increased. A card being inserted in such a terminal shows its counter value being incremented, now taking the value X4, which is higher than X3 since the card was inserted in other terminals from which if received regularly increasing value of counter.

When such a card is inserted in a robbed terminal it compares the counter value presented by the terminal with the one it owns, detecting that its value is bigger than the one presented by the terminal: the verification X4 ≤ X3 fails. Consequently the card rejects (step 5) the terminal and refuses to deliver the protected information.

A weakness of the system resides on the fact that counters of the card member of the network shall be regularly updated while blacklisted terminal are not. A robbed terminal still can fraudulently read a card that was not inserted in an authorized terminal since the date the terminal was robbed.

To counter such issue, the authority of the network shall provide various means to have network cards regularly updated.

Alternatively, the time stamping technique may be used instead of a counter. The principle is the same. The card compares the date/time it owns with the one presented by the terminal IFD. If it is earlier, the authentication is validated. If its date/time is more recent, the authentication is rejected.

To gain flexibility in the invention implementation, it should be possible to soften the comparison of the card time stamp with the terminal one. It may be possible to accept a terminal with a time stamp that is older to the one in the card, if the time difference is not too large (e.g. two time stamps with the same date but having the terminal one issued at 8 in the morning while the one in the card indicates 10).

Based in the time-stamping principle, one may choose a solution enhancing the security using the following techniques:
When addressing very sensitive data, the card requires a time-stamp that is more recent than the one it owns, the time-stamp including the date, hour, minutes and seconds. To answer the requirement, the terminal shall be connected on-line to a security module that is able to sign and send it the current date and time.

## Claims

1. Method to secure a portable object containing secret information working with at least a portable object accepting device(s), **characterised in that** it consists:
- in making a variable progressing regularly and dispatching at each modification its new value to allowed portable object accepting device(s) ;
- in checking in said portable object when working with said portable object accepting device the progression of the variable contained in said portable object accepting device by comparison to a reference value stored in said portable object;
- in replacing the reference value in said portable object by the value of the variable contained in the portable object accepting device if the comparison shows a progression of said variable compared to the reference value or an equivalence with the reference value ;
- in preventing the access to said secret information if the comparison does not show a progression or an equivalence.

2. Method according to claim 1, **characterised in that** a signature of said new value is calculated with a private key and dispatched with said value to the portable object accepting device(s).

3. Method according to one of claims 1 to 2, **characterised in that** said new value is generated by an authority of certification.

4. Method according to one of claims 1 to 3, **characterised in that** said new value is calculated by means of a counter, which is incremented (or decremented) and the comparison operation in said portable object consists in checking that the value coming from the portable object accepting device is similar or bigger (or lower) than the reference value.

5. Method according to one of claims 1 to 3, **characterised in that** said value is changed according to the time stamping technique.

6. Method according to one of claims 1 to 5, **characterised in that** the checking operation is done before allowing any access to said secret information stored in the portable object.

7. Method to secure a portable object containing secret information working with at least a portable object accepting device(s), **characterised in that** it consists in making a variable progressing regularly and in dispatching at each modification its new value from said third device to allowed portable object accepting device(s), the non-progression of said value in the portable object accepting device(s) being used by said portable object to prevent the access to said secret information.

8. Method to secure a portable object containing secret information working with at least a portable object accepting device(s), **characterised in that** it consists in receiving at each modification a variable progressing regularly from a third device and in sending the value of said variable to said portable object when being connected and working with said portable object at least before any access to secret information contained in said portable object, the non-progression of said value in the portable object accepting device(s) being used by said portable object to prevent the access to said secret information.

9. Method to secure a portable object containing secret information working with at least a portable object accepting device(s), **characterised in that** it consists in comparing a value of a variable received from a portable object accepting device with a reference value stored in data storage means of said portable object, in replacing the reference value by the received variable value if the comparison shows a progression of said variable compared to the reference value or an equivalence with the reference value and in preventing the access to said secret information if the comparison does not show a progression or an equivalence.

10. Electronic module including data processing means and data storage means, **characterised in that** it comprises means to compare the value of a variable received from a portable object accepting device with a reference value stored in the data storage means, means to replace the reference value by the received variable value if the comparison shows a progression of said variable compared to the reference value or an equivalence with the reference value and means to prevent the access to said secret information if the comparison does not show a progression or an equivalence.

11. Portable object **characterised in that** it comprises the electronic module according to claim 10.

12. Portable object accepting device including data processing means and data storage means, **characterised in that** it comprises means allowing to receive at each modification the value of a variable progressing regularly, to store the value of said variable and to send said value of said variable to a portable object when being connected and working with said portable object at least before any access to secret information contained in said portable object, the non-progression of said value in the portable object accepting device being used by said portable object to prevent the access to said secret information.

13. Certification authority including data processing means and data storage means, **characterised in that** it comprises means to make a variable progressing regularly and to dispatch at each modification of said variable its new value to allowed portable object accepting device(s), the non-progression of said value in the portable object accepting device being used by portable object working with said portable object accepting device to prevent the access to secret information contained in said portable object.

14. Certification authority according to claim 13, **characterized in that** it calculates a signature of the value of the variable with a cryptographic key and sends said signature with said value to said portable object accepting device.

15. Computer program comprising program code instructions to execute the steps of the method according to one of claims 1 to 9 when said program is run in an electronic assembly.
